# EUROPÄISCHE PATENTANMELDUNG

(11) **EP 2 781 473 A1**
(43) Veröffentlichungstag der Anmeldung: **24.09.2014**
(21) Anmeldenummer: 14161176.4
(22) Anmeldetag: 21.03.2014
(51) Int. Cl.: B65G 47/08, B65G 47/28, B65G 47/84

(54) **Vorrichtung zum Transportieren von Kunststoffvorformlingen mit kontinuierlicher Zuführung**

(30) Priorität: 21.03.2013 DE 102013102878
(71) Anmelder: Krones AG, 93073 Neutraubling (DE)
(72) Erfinder: Kindl, Norbert, 93073 Neutraubling (DE)
(74) Vertreter: Bittner, Bernhard

(57) **Zusammenfassung**

Eine Vorrichtung (1) zum Transportieren von Behältnissen (10) und insbesondere von Kunststoffvorformlingen, mit einem ersten umlaufenden Träger (2), an dem eine Vielzahl von Eingriffsmitteln (4) angeordnet ist, derart, dass diese Eingriffsmittel entlang einer vorgegebenen Umlaufbahn umlaufen. Erfindungsgemäß weist die Umlaufbahn (U) wenigstens einen Bahnabschnitt (U1) auf, in welchem die Eingriffsmittel (4) während ihrer Bewegung entlang der Umlaufbahn auf einen Strom der Behältnisse zustellbar sind und die Eingriffsmittel derart geformt sind, dass sie bei einer Zustellung auf den Strom der Kunststoffbehältnisse zwischen zwei Kunststoffbehältnisse (10) eintreten und diese zwei Kunststoffbehältnisse hierdurch auseinanderdrängen.

## Beschreibung

Die vorliegende Erfindung bezieht sich auf eine Vorrichtung und ein Verfahren zum Transportieren von Behältnissen, insbesondere von Kunststoffbehältnissen und insbesondere von Kunststoffvorformlingen. Bei der Herstellung von Getränkebehältnissen werden üblicherweise Kunststoffvorformlinge zur Verfügung gestellt, anschließend erwärmt und schließlich in einer Umformungsmaschine, wie beispielsweise einer Streckblasmaschine, im erwärmten Zustand zu den Kunststoffbehältnissen umgeformt. Dabei werden diese Kunststoffvorformlinge üblicherweise bereits der Erwärmungseinrichtung, wie insbesondere einem Infrarotoder Mikrowellenofen vereinzelt zugeführt, insbesondere, da diese während ihrer Erwärmung üblicherweise auch um ihre eigene Achse gedreht werden. Aus diesem Grunde ist es erforderlich, dass die Kunststoffvorformlinge, welche üblicherweise in einem kontinuierlichen Strom ankommen, vereinzelt werden.

Zu diesem Zweck werden im Stand der Technik üblicherweise sogenannte Eintaktsterne verwendet. Diese weisen an ihrem Außenumfang ein üblicherweise sägezahnartiges Profil auf. Dieses Profil bewirkt, dass die Kunststoffvorformlinge, die in einem kontinuierlichen Strom ankommen, stückweise abgenommen und damit vereinzelt werden. Ein Nachteil dieser Vorgehensweise ist der ständig unterbrochene Zufluss der Vorformlinge von einer Ablaufschiene beim Einscheren in den besagten Sägezahnstern. Diese Zuflussstörung bewirkt bei hoher Leistung und auch bei ungünstiger Geometrie der Kunststoffvorformlinge immer wieder Funktionsstörungen.

Der vorliegenden Erfindung liegt daher die Aufgabe zugrunde, die Vereinzelung dieser Kunststoffbehältnisse zu vereinfachen und insbesondere weniger störanfällig zu gestalten. Dies wird erfindungsgemäß durch Vorrichtungen und Verfahren nach den unabhängigen Patentansprüchen erreicht.

Vorteilhafte Ausführungsformen und Weiterbildungen sind Gegenstand der Unteransprüche.

Eine erfindungsgemäße Vorrichtung zum Transportieren von Behältnissen und insbesondere von Kunststoffvorformlingen weist einen ersten umlaufenden Träger auf, an dem eine Vielzahl von Eingriffsmitteln angeordnet ist, derart, dass diese Eingriffsmittel entlang einer vorgegebenen Umlaufbahn umlaufen.

Erfindungsgemäß weist die Umlaufbahn einen ersten Bahnabschnitt auf, in welchen die Eingriffsmittel während ihrer Bewegung entlang der Umlaufbahn auf einen Strom der Behältnisse zustellbar sind, wobei die Eingriffsmittel derart geformt sind, dass sie bei einer Zustellung auf den Strom der Kunststoffbehältnisse zwischen zwei Kunststoffbehältnisse eintreten und diese zwei Kunststoffbehältnisse hierdurch auseinanderdrängen.

Im Gegensatz zum Stand der Technik, in dem also jeweils die Kunststoffvorformlinge einzeln mitgenommen werden, bzw. der jeweils vorderste in einer Reihe stehende Kunststoffvorformling mitgenommen wird, wird hier vorgeschlagen, dass die besagten Eingriffsmittel jeweils in die Bereiche zwischen zwei (runde) Kunststoffvorformlinge eingreifen und auf diese Weise die Kunststoffvorformlinge auseinanderdrängen und sie so vereinzeln. Bevorzugt ist die Vorrichtung derart gestaltet, dass in einem zugestellten Zustand das Eingriffsmittel wenigstens abschnittsweise zwischen zwei Kunststoffvorformlingen liegt. Bevorzugt können die Eingriffsmittel dabei zwischen die Mündungsbereiche der einzelnen Vorformlinge eingebracht werden. Es wäre jedoch auch denkbar, dass die Eingriffsmittel unterhalb des Tragrings, also im Körperbereich der Vorformlinge eingeschoben werden.

Bei einer weiteren vorteilhaften Ausführungsform ist die Umlaufbahn bzw. liegt die Umlaufbahn in einer Ebene, zu der die Transportbahn der Kunststoffvorformlinge parallel ist. Vorteilhaft läuft die Umlaufbahn der Eingriffsmittel wenigstens abschnittsweise parallel zu der Transportbahn der Kunststoffvorformlinge. Besonders bevorzugt verläuft die Umlaufbahn der Eingriffsmittel wenigstens abschnittsweise geradlinig.

Vorteilhaft werden dabei jeweils zwei benachbarte Kunststoffvorformlinge während des Zustellens der Eingriffsmittel auseinandergedrängt. Bei einer weiteren vorteilhaften Ausführungsform weist die Umlaufbahn wenigstens zwei Bahnabschnitte mit unterschiedlichen Krümmungen bzw. Krümmungsradien auf. Bei den aus dem Stand der Technik bekannten Sägezahnvorrichtungen sind die Umlaufbahnen jedenfalls kreisförmig. Hier wird vorgeschlagen, dass die Umlaufbahn unterschiedliche Segmente mit unterschiedlichen Krümmungen aufweist. So könnten beispielsweise geradlinig verlaufende Abschnitte und bezüglich dieser geradlinig verlaufenden Abschnitte, schräg verlaufende Abschnitte, gekrümmt verlaufende Abschnitte und dergleichen vorhanden sein.

Vorteilhaft weist die Umlaufbahn einen ersten geradlinig verlaufenden Abschnitt auf sowie einen zweiten geradlinigen Abschnitt, der jedoch bezüglich des ersten geradlinig verlaufenden Abschnittes schräg verläuft. So könnten über einen besagten schräg verlaufenden Abschnitt die Eingriffsmittel an den Strom der Kunststoffbehältnisse herangeführt werden, und in dem Bereich des zweiten geradlinig verlaufenden Abschnittes könnten die Behältnisse vereinzelt transportiert werden.

Bei einer weiteren vorteilhaften Ausführungsform ist der erste Träger ein umlaufender und (insbesondere in der Ebene der Umlaufbahn) wenigstens abschnittsweise flexibler Träger. So kann es sich bei dem Träger beispielsweise um einen Riemen handeln, der bevorzugt um eine Vielzahl von (Zahn)rädern geführt ist. Anstelle eines Riemens könnte jedoch auch eine umlaufende Kette vorgesehen sein, deren Flexibilität insbesondere in der Ebene der Umlaufbahn gegeben ist. Auf diese Weise können die Eingriffsmittel entlang von Teilstrecken mit unterschiedlichen Krümmungsverläufen geführt werden.

Vorteilhaft sind an diesen Transportriemen oder an dieser Transportkette die Eingriffseinrichtungen bzw. Eingriffsmittel angeordnet.

Bei einer weiteren vorteilhaften Ausführungsform sind die Eingriffsmittel gegenüber dem Träger schwenkbar angeordnet. Dabei sind diese Eingriffsmittel insbesondere um eine Achse schwenkbar, die senkrecht zu der Umlaufbahn der Eingriffsmittel ist. Damit sind bevorzugt auch die Eingriffsmittel in der durch die Umlaufbahn gebildeten Ebene schwenkbar und damit besonders bevorzugt auch schwenkbar in einer Ebene, zu der eine Längsrichtung der zu transportierenden Kunststoffbehältnisse senkrecht steht.

Bevorzugt sind die Eingriffsmittel an dem ersten Transportmittel, beispielsweise einer Kette oder einem Riemen, angelenkt.

Bei einer weiteren vorteilhaften Ausführungsform kann die geometrische Position wenigstens eines Abschnitts der Umlaufbahn der Eingriffsmittel gegenüber dem Strom der Behältnisse verändert werden. Durch diese Veränderung ist bevorzugt die Eindringtiefe der Eingriffsmittel in den Behältnisstrom veränderbar. Auf diese Weise ist besonders bevorzugt eine gewünschte Teilung zwischen den Kunststoffbehältnissen einstellbar.

Bei einer weiteren vorteilhaften Ausführungsform weist die Umlaufbahn der Eingriffsmittel wenigstens einen geradlinigen Abschnitt auf. Insbesondere handelt es sich hierbei um einen Abschnitt, innerhalb dessen während des Arbeitsbetriebs die Eingriffsmittel in Kontakt mit den zu transportierenden Kunststoffvorformlingen stehen.

Bei einer weiteren vorteilhaften Ausführungsform weist die Vorrichtung eine Zuführschiene auf, welche die Behältnisse stützt und entlang derer die Behältnisse transportiert werden. Vorteilhaft handelt es sich bei dieser Zuführschiene um ein passives Transportmittel, das heißt, hier werden die Kunststoffvorformlinge entweder dadurch bewegt, dass sie von weiter hinter liegenden Kunststoffvorformlingen geschoben werden oder aber beispielsweise eine Bewegung auf Grundlage der Schwerkraft erfolgt. Insbesondere werden die Kunststoffvorformlinge innerhalb dieser Zuführschiene noch nicht vereinzelt geführt, sondern stoßen dabei insbesondere aneinander.

Bei einer weiteren vorteilhaften Ausführungsform ist die Zuführschiene derart ausgebildet, dass ein Grundkörper der Kunststoffvorformlinge durch sie hindurchtreten kann, nicht aber ein weiterer Bereich der Kunststoffvorformlinge, der insbesondere in einem Bereich deren Mündung angeordnet ist. Bei diesem weiteren Bereich kann es sich insbesondere um einen sogenannten Tragring oder auch um einen Sicherungsring handeln, der üblicherweise bei derartigen Kunststoffvorformlingen vorhanden ist.

Bei einer weiteren vorteilhaften Ausführungsform weist wenigstens ein Eingriffsmittel, weisen bevorzugt die Eingriffsmittel sich im Wesentlichen in einer Richtung erweiternde, z.B. eine dreiecksförmige Gestalt auf. Durch diese dreiecksförmige Gestalt kann erreicht werden, dass bei einem mehr oder weniger weiten Zustellen der Eingriffsmittel auf den Behältnisstrom auch variiert werden kann, wie weit jeweils die benachbarten Kunststoffvorformlinge auseinandergedrängt werden. Bevorzugt können die einzelnen Eingriffsmittel wenigstens in einem Abschnitt eine Dreiecksform aufweisen.

Vorteilhaft ist eine Antriebseinrichtung zum Antreiben des Trägers vorhanden. Falls es sich, wie oben erwähnt, hierbei um eine Transportkette oder einen Transportriemen handelt, kann beispielsweise ein Umlenkrad, über welches dieser Träger umgelenkt wird, angetrieben sein. Vorteilhaft handelt es sich hierbei um einen elektromotorischen Antrieb.

Bei einer weiteren vorteilhaften Ausführungsform weist die Vorrichtung einen zweiten umlaufenden Träger auf, wobei eine Umlaufebene des zweiten Trägers parallel zu der Umlaufebene des ersten Trägers angeordnet ist. Vorteilhaft ist auch dieser zweite umlaufende Träger als umlaufende Transportkette und insbesondere als umlaufender Transportriemen ausgeführt. Dabei ist es möglich, dass die Eingriffsmittel wenigstens abschnittsweise zwischen diesen beiden Trägern angeordnet sind. Vorteilhaft ist das Eingriffsmittel auch an dem zweiten Träger angeordnet. Vorteilhaft ist das Eingriffsmittel auch an dem zweiten Träger schwenkbar angeordnet, bzw. an diesem zweiten Träger angelenkt.

Durch die geometrische Ausgestaltung der Umlaufbahn des ersten Trägers und des zweiten Trägers bzw. den jeweiligen Verläufen kann ein Schwenken der Eingriffsmittel erreicht werden. So ist es möglich, dass eine Schwenkachse des Eingriffsmittels, über welche das Eingriffsmittel an dem ersten Träger angeordnet ist und eine Schwenkachse des Eingriffsmittels, bezüglich derer das Eingriffsmittel an dem zweiten Träger angelenkt ist, bezüglich einander versetzt sind. Wenn sich nun im Rahmen der Umlaufbahn die Positionen des ersten Trägers bzw. des zweiten Trägers bezüglich einander ändern, kann auf diese Weise, wie unten noch genauer erläutert wird, auch ein Schwenken des Eingriffsmittels erreicht werden.

Bei einer weiteren vorteilhaften Ausführungsform ist das Eingriffsmittel aus einem Kunststoff hergestellt.

Die vorliegende Erfindung ist weiterhin auf ein Verfahren zum Transportieren von Kunststoffbehältnissen und insbesondere von Kunststoffvorformlingen gerichtet. Dabei werden die Kunststoffbehältnisse in einem kontinuierlichen Strom angefördert und mittels einer Vereinzelungseinrichtung vereinzelt. Vorteilhaft weist die Vereinzelungseinrichtung eine Vielzahl von an einen umlaufenden Träger angeordneten Eingriffsmitteln auf, welche auf einen Strom der Kunststoffbehältnisse zugestellt werden und bei dieser Zustellung jeweils zwischen zwei benachbarte Kunststoffbehältnisse eintreten und diese dadurch auseinanderdrängen, sodass eine Vereinzelung der Kunststoffbehältnisse erreicht wird. Vorteilhaft laufen die Eingriffsmittel in einer Ebene um, zu welcher der Transportpfad der Behältnisse wenigstens parallel ist und beispielsweise, mit welcher dieser Transportpfad zusammenfällt.

Vorteilhaft werden die Kunststoffbehältnisse wenigstens zeitweise und bevorzugt vollständig während ihrer Vereinzelung auf einem geradlinigen Transportpfad transportiert. Dabei erstreckt sich dieser Transportpfad bevorzugt zumindest in einer Richtung bzw. in einer Projektion geradlinig. Daneben kann jedoch der Transportpfad auch Komponenten in einer vertikalen Richtung aufweisen, so dass es insbesondere möglich wäre, dass die Kunststoffbehältnisse abschnittsweise unter einer Wirkung der Schwerkraft gefördert werden. Es wäre jedoch auch denkbar, die Vorformlinge unter Einfluss weiterer Komponenten, wie z.B. Druckluft, zu transportieren.

Vorteilhaft werden die Kunststoffbehältnisse durch eine Bewegung der Eingriffsmittel transportiert. Vorteilhaft werden weiterhin auch die Eingriffsmittel wenigstens zeitweise entlang einer geradlinigen Bahn bewegt. Bevorzugt werden die Eingriffsmittel zumindest während derjenigen Zeiträume, in welchen sie in Kontakt mit Kunststoffbehältnissen stehen, entlang einer geradlinigen Bahn bewegt.

Bei einem weiteren bevorzugten Verfahren werden die Kunststoffbehältnisse mit der durch die Vereinzelungseinrichtung eingestellten Teilung abtransportiert und insbesondere einer Erwärmungseinrichtung zum Erwärmen der Kunststoffbehältnisse zugeführt.

Weitere Vorteile und Ausführungsformen ergeben sich aus den beigefügten Zeichnungen. Darin zeigen:
- Fig. 1: eine Darstellung einer erfindungsgemäßen Vorrichtung zum Vereinzeln von Kunststoffbehältnissen;
- Fig. 2: eine weitere Ansicht der in Fig. 1 gezeigten Vorrichtung;
- Fig. 3: zwei Darstellungen der erfindungsgemäßen Vorrichtung zur Veranschaulichung der Behandlung von unterschiedlichen Kunststoffvorformlingen;
- Fig. 4: zwei Seitenansichten der in Fig. 3 gezeigten Vorrichtung;
- Fig. 5: eine weitere Detailansicht der erfindungsgemäßen Vorrichtung;
- Fig. 6: eine Darstellung zur Veranschaulichung einer Umlenkung für einen Zahnriemen; und
- Fig. 7: eine Explosionsansicht einer erfindungsgemäßen Vorrichtung.

Die kontinuierliche Vereinzelung der Kunststoffvorformlinge 10 auf einen konstanten Teilungsabstand wird bei der erfindungsgemäßen Vorrichtung bevorzugt in einer linearen Zuführstrecke T1 durchgeführt. Auf diese Weise werden Störungen eliminiert und es werden gleichzeitig hohe Durchsatzgeschwindigkeiten ermöglicht. Die Kunststoffvorformlinge 10 werden hier bei einer geradlinigen und stetigen Vorwärtsbewegung kaum gestört. Es entfallen aufwendige Übergaben und die kunststoffvorformlingsabhängigen Garnituren. Wie im Folgenden genauer gezeigt wird, werden bevorzugt durch Zahnriemen - geführte Eingriffsmittel bzw. Teilungsklinken die Kunststoffvorformlinge beim Abgleiten von einer geneigten Zuführschiene aufgenommen. Dabei fahren die Eingriffsmittel bzw. die Klinken zwischen die benachbarten Kunststoffvorformlinge und geben so einen definierten Abstand vor.

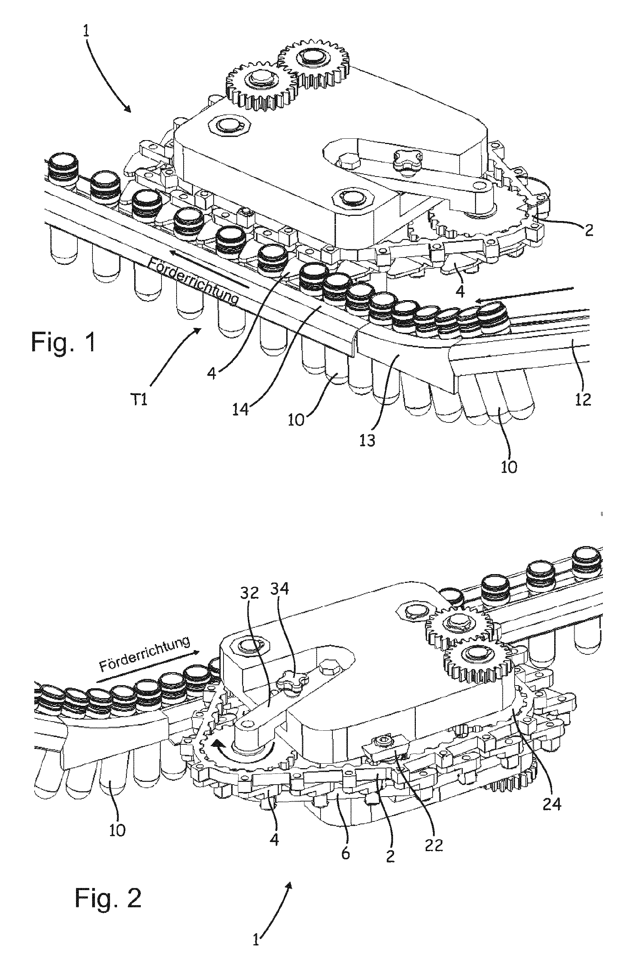

In Fig. 1 bezieht sich das Bezugszeichen 12 auf eine hier geneigte Zuführschiene, bei der die Kunststoffvorformlinge unter Wirkung der Schwerkraft der erfindungsgemäßen Vorrichtung 1 zugeführt werden. Es wäre jedoch auch denkbar, die Zuführschiene horizontal anzuordnen und den Transport der Vorformlinge über weitere Komponenten, wie z.B. einer Druckluftzuführung, zu gewährleisten. An die geneigte Zuführschiene kann sich ein gekrümmtes Wegstück anschließen. Die einzelnen Kunststoffvorformlinge werden in diesem Bereich noch hintereinander transportiert und insbesondere auch aneinander anstoßend. Die Vorrich- tung 1 weist hier einen umlaufenden Träger 2 auf, der hier als Transportriemen ausgeführt ist. Genauer handelt es sich bei diesem Transportriemen um einen Zahnriemen, d.h. einem Riemen mit einer Innenverzahnung, der entsprechend von Zahnrädern angetrieben bzw. auch umgelenkt wird.

An diesem Riemen ist eine Vielzahl von Eingriffsmitteln 4 angeordnet, welche auf die Kunststoffvorformlinge zugestellt werden und welche so zwischen die einzelnen Kunststoffvorformlinge gleiten, wie in Fig. 1 gezeigt, und diese so einerseits vereinzeln und andererseits bereits auf einen gewünschten Abstand bzw. eine gewünschte Teilung bringen. Ebenfalls ist in Fig. 1 die Förderrichtung angezeigt. Das Bezugszeichen 14 kennzeichnet eine Trägerschiene, entlang derer die Kunststoffvorformlinge gefördert werden. Im Bereich der Transportschiene werden die Kunststoffvorformlinge in einer geraden Richtung gefördert.

Man erkennt dabei, dass die Eingriffsmittel 4 an dem Träger 2 angelenkt sind. Diese Eingriffsmittel 4 weisen hier eine beispielsweise dreiecksförmige Gestalt auf, die sich erweitert, sodass bei einem Eintreten dieser Eingriffsmittel die jeweiligen Kunststoffvorformlinge auseinander- gedrängt werden. Die Eingriffsmittel 4 greifen hier oberhalb der Trägerschiene 14 der Kunststoffvorformlinge ein. Bevorzugt sind die Eingriffsmittel stets oberhalb der Trägerschiene 14 angeordnet. Bevorzugt greifen die Eingriffsmittel zwischen Gewindebereichen der einzelnen Kunststoffvorformlinge ein. Bevorzugt sind die Eingriffsmittel äquidistant an dem Träger 2 angeordnet. Zwischen der Zuführschiene 12 und der Trägerschiene 14 ist eine Übergangsschiene 13 vorgesehen, in welcher der in der vertikalen Richtung schräge Verlauf der Zuführeinrichtung 12 in den horizontalen Verlauf der Trägerschiene 14 überführt wird.

Man erkennt, dass die Förderstrecke der Kunststoffvorformlinge jedenfalls in dem Bereich, in dem die Eingriffsmittel zwischen die Kunststoffvorformlinge eingreifen, geradlinig ist. Weiterhin ist ein Abschnitt vorgesehen, entlang dessen die Eingriffsmittel 4 auf die Kunststoffvorformlinge zugestellt werden. Dieser Abschnitt ist in der Figur ebenfalls geradlinig, jedoch schräg bezüglich des Transportpfades bzw. der Förderrichtung der Kunststoffvorformlinge. Bevorzugt schließt sich an die in Fig. 1 gezeigte Vorrichtung eine Erwärmungseinrichtung zum Erwärmen der Kunststoffvorformlinge an. Diese Erwärmungseinrichtung weist dabei bevorzugt eine Vielzahl ein Haltemitteln auf, welche die einzelnen Kunststoffvorformlinge halten. Diese einzelnen Haltemittel sind dabei bevorzugt in einem vorgegebenen jedoch konstanten Abstand zueinander angeordnet. Die erfindungsgemäße Vorrichtung vereinzelt bevorzugt die Kunststoffvorformlinge auf einen Abstand, der dem Abstand dieser Haltemittel der Erwärmungseinrichtung entspricht.

Fig. 2 zeigt eine weitere Ausgestaltung einer erfindungsgemäßen Vorrichtung 1. Bei dieser Ausgestaltung ist eine Spanneinrichtung 22 dargestellt, welche den Träger, der hier als Riemen ausgestaltet ist, spannt. Dabei kann es sich beispielsweise um ein Zahnrad handeln, welches einerseits in den Träger eingreift, welches andererseits jedoch diesen auch spannt. Das Bezugszeichen 24 kennzeichnet ein weiteres Umlenkrad, welches hier ebenfalls als Zahnrad ausgeführt ist, um welches der Riemen 2 bzw. 6 geführt ist.

Das Bezugszeichen 32 kennzeichnet einen schwenkbaren Arm, der hier zu einer Veränderung (der Lage) des Zuführabschnitts dient, entlang dessen die Eingriffsmittel den Kunststoffvorformlingen zugeführt werden. Genauer kann durch ein Schwenken dieses Arms 32 der Winkel geändert werden, unter dem die Eingriffsmittel den Kunststoffvorformlingen zugeführt werden. Das Bezugszeichen 34 kennzeichnet ein Feststellmittel, mit dem der Arm in einer bestimmten Position fixiert werden kann.

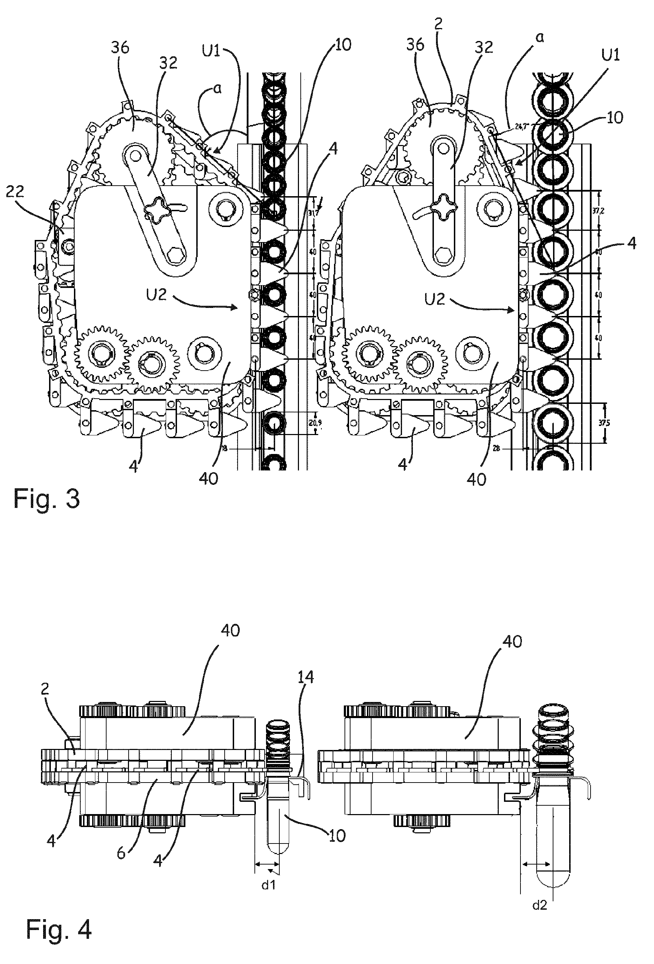

Fig. 3 zeigt eine Gegenüberstellung der erfindungsgemäßen Vorrichtung bei unterschiedlichen Durchmessern von Kunststoffvorformlingen 10. Bei der linken Darstellung sind Kunststoffvorformlinge zu vereinzeln, welche einen geringeren Querschnitt aufweisen, als bei der in der rechten Teilfigur gezeigten Darstellung. Man erkennt, dass der Abschnitt U1, in dem die Eingriffselemente 4 an den Strom der Kunststoffvorformlinge herangeführt werden, jeweils geradlinig verläuft. Bei der linken Darstellung d.h. der Zustellung auf die Kunststoffvorformlingen mit den geringeren Durchmessern ist der Zustellwinkel a jedoch erheblich größer als bei der rechten Darstellung, bei der Kunststoffvorformlinge mit größerem Querschnitt vereinzelt werden sollen.

Allgemein können unterschiedliche Durchmesser der Kunststoffvorformlinge durch eine Variation der Zustelltiefe der hier keilförmigen Eingriffsmittel zur Ablaufschiene ohne zusätzliche Garnituren eingestellt werden.

Die unterschiedlichen Durchmesser der Kunststoffvorformlinge bewirken unterschiedliche Teilungsabstände beim Abgleiten an der Zuführschiene. Aus diesem Grunde kann der Einscherabstand der Eingriffsmittel durch eine Veränderung des Zuführwinkels mittels des oben erwähnten Arms 32 des Klinkenriemens dem Durchmesser der Kunststoffvorformlinge angepasst werden. Für Weithalskunststoffvorformlinge mit einem Querschnitt von mehr als 32 mm kann ein Riemensatz mit einer Teilung von 50 mm eingesetzt werden.

In Fig. 3 ist der gesamte Verlauf der Eingriffsmittel 4 durch den Verlauf des Trägers 2 gegeben. Man erkennt, wie oben gesagt, durch einen Vergleich zwischen den beiden Teilfiguren aus Fig. 3, dass bei der Verwendung der größeren Kunststoffvorformlinge der Winkel, unter dem die Eingriffsmittel auf die Kunststoffvorformlinge zulaufen, deutlich flacher ist, als bei der linken Ausführungsform. Dies kann durch ein Schwenken des Arms 32 gegenüber dem Hauptträger 40 erreicht werden.

Weiterhin kann der Abstand der Eingriffsmittel in dem geradlinigen Förderbereich der Kunststoffvorformlinge zu den Kunststoffvorformlingen verändert werden. Man erkennt, dass in der linken Teilfigur die Eingriffsmittel 4 weiter zwischen die Kunststoffvorformlinge eintreten, als bei der rechten Teilfigur. Auf diese Weise wird bei der linken Teilfigur der Abstand zwischen den Kunststoffvorformlingen größer als bei der rechten Teilfigur. Dabei ist es jedoch denkbar, dass der Abstand zwischen den jeweiligen Längsrichtungen der Kunststoffvorformlinge gleich bleibt und diese lediglich, falls sie einen größeren Querschnitt haben, weniger auseinandergedrängt werden, als wenn sie einen kleineren Querschnitt aufweisen. Das Bezugszeichen 36 kennzeichnet ein Zahnrad, um welches der riemenartige Träger 2 umläuft und welches mit dem Arm 32 schwenkbar ist.

Fig. 4 zeigt eine Seitenansicht der in Fig. 3 gezeigten Vorrichtung. Man erkennt hier wiederum die Zuführschiene 14, entlang derer die Kunststoffvorformlinge transportiert werden. Weiterhin erkennt man an dem Abstand d1 in der linken Figur, dass diese geringer ist, als der Abstand d2 in der rechten Figur. Dies bedeutet, dass bei der linken Figur (das heißt bei den Kunststoffvorformlingen mit dem geringeren Querschnitt) die Eingriffsmittel weiter auf die Kunststoffvorformlinge zugestellt werden, als bei der rechten Teilfigur.

Auf diese Weise ist es möglich, bei einem Strom von Kunststoffvorformlingen jeweils eine bestimmte Teilung unabhängig von deren Durchmesser zu erreichen. Mit anderen Worten kann ein Strom von Kunststoffvorformlingen, welche einen bestimmten Durchmesser aufweisen, auf die gleiche Teilung gebracht werden, wie ein Strom von Kunststoffvorformlingen mit einem hier gegenüber größeren Durchmesser.

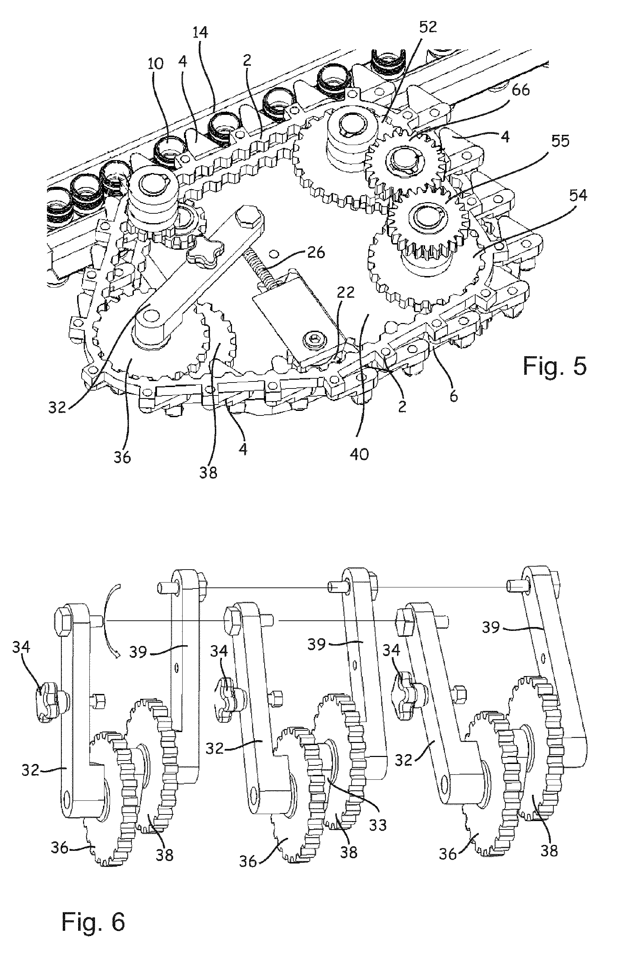

Fig. 5 zeigt den inneren Aufbau einer erfindungsgemäßen Vorrichtung. Dabei können sich die Eingriffsmittel 4 bzw. die Klinken zwischen den beiden Zahnriemen 2 und 6, das heißt den beiden umlaufenden Trägern, ungehindert bewegen, werden aber, wie unten genauer gezeigt wird, durch eine versetzte Riemenführung stets in der gleichen Position gehalten.

Mit anderen Worten sind die Eingriffsmittel hier sowohl an dem ersten Träger 2 als auch an dem zweiten Träger 6, die hier beide als umlaufende Zahnriemen ausgeführt sind, angelenkt und können sich jeweils bezüglich den Schwenkachsen, die hier senkrecht zu der Umlaufebene der Riemen stehen, bewegen. Durch eine entsprechende Anordnung dieser beiden Zahnriemen wird erreicht, dass die Eingriffsmittel in genau definierter Weise abgelenkt werden und so insbesondere während des Abschnitts des Zustellens auf die Kunststoffvorformlinge als auch während des Transports der Kunststoffvorformlinge auf diese zuweisen. Eine derartige Umlenkung der Eingriffsmittel wird beispielsweise durch ein gegeneinander Versetzen der beiden Träger 2 und 6 erreicht, wie dies beispielsweise durch die Anordnung der beiden Zahnräder 36 und 38, die hier exzentrisch angeordnet sind, gezeigt ist.

Diese beiden Zahnräder weisen zwar hier bevorzugt den gleichen Durchmesser auf, sind jedoch, wie in Fig. 5 gezeigt, zueinander versetzt. Durch diese definierte Versetzung werden auch die beiden Zahnriemen gegeneinander derart versetzt, dass die an beiden Zahnriemen angelenkten Eingriffsmittel bezüglich der Träger bzw. der Riemen geschwenkt werden.

Mit anderen Worten verlaufen die beiden Träger 2 und 6 hier nicht vollständig gleichartig zueinander, sondern die Richtungen der jeweiligen Träger verschieben sich teilweise zueinander. So wird der untere Träger 6 beispielsweise abschnittsweise innerhalb des oberen Trägers 2 bzw. des ersten Trägers geführt. Durch ein derartiges Verschieben des einen Trägers 2 gegenüber dem anderen Träger 6 in der Bewegungsebene wird auch ein entsprechendes Schwenken der Eingriffsmittel erreicht, da die erste Schwenkachse des Eingriffsmittels, mittels der das Eingriffsmittel an den ersten Träger angeordnet ist, gegenüber der zweiten Schwenkachse, mittels der das Eingriffsmittel an den zweiten Träger angeordnet ist, verschoben wird.

Fig. 6 zeigt eine Darstellung in dem Bereich des Schwenkarms 32. Man erkennt, dass hier die beiden Zahnräder 36 und 38, um welche die (nicht gezeigten) Träger 2 und 6 geführt werden, in ihrer Gesamtheit bezüglich je einer Schwenkachse schwenkbar sind. Ein unterer Arm 39 wird ebenfalls bezüglich einer vorgegebenen Schwenkachse geschwenkt. Dabei ist die Schwenkachse des Arms 32 gegenüber der Schwenkachse des Arms 39 versetzt. Auf diese Weise wird durch eine entsprechende Schwenkung auch die Relativposition der beiden Zahnräder 36 und 38 bezüglich einander geringfügig geändert und damit auch die Relativposition der beiden Träger 2 und 6 bezüglich einander.

Das Bezugszeichen 33 kennzeichnet eine Gelenkverbindung, über welche die beiden Zahnräder 36 und 38 miteinander gekoppelt sind. Bei einer weiteren vorteilhaften Ausführungsform sind daher auch die beiden Zahnräder 36 und 38, bzw. deren jeweiligen Drehachsen, gelenkig miteinander verbunden. Diese bedeutet, dass sich zwar ein Abstand der beiden Drehachsen der Zahnräder 36 und 38 nicht ändert, jedoch sich die Relativstellung der beiden Zahnräder zueinander ändern kann.

Damit weist bevorzugt die erfindungsgemäße Vorrichtung wenigstens ein Umlenkrad auf, um welches ein Träger geführt wird, wobei dieses Umlenkrad bezüglich eines Hauptträgers, an dem bevorzugt weitere Räder zum Führen der Träger angeordnet sind, schwenkbar angeordnet ist.

Das Bezugszeichen 26 (Fig. 5) kennzeichnet ein Vorspannmittel, welches das oben erwähnte Spannrad 22 nach außen drängt und somit die beiden Träger 2 und 6 spannt. Dabei ist es möglich, dass beide Träger in Eingriff mit diesem Spannrad stehen 22, es wäre jedoch auch möglich, dass zwei derartige Spannräder vorgesehen sind, um welche jeweils die beiden Träger 2 und 6 geführt sind.

Die weiteren Zahnräder 52 und 54, welche zum Antrieb der Träger 2 und 6 dienen, können über Zahnräder 55 und 66 miteinander gekoppelt sein. So ist es möglich, dass ein Antrieb vorgesehen ist, der nur eines dieser genannten Zahnräder antreibt und somit auch die beiden riemenartige Träger 2 und 6 antreibt.

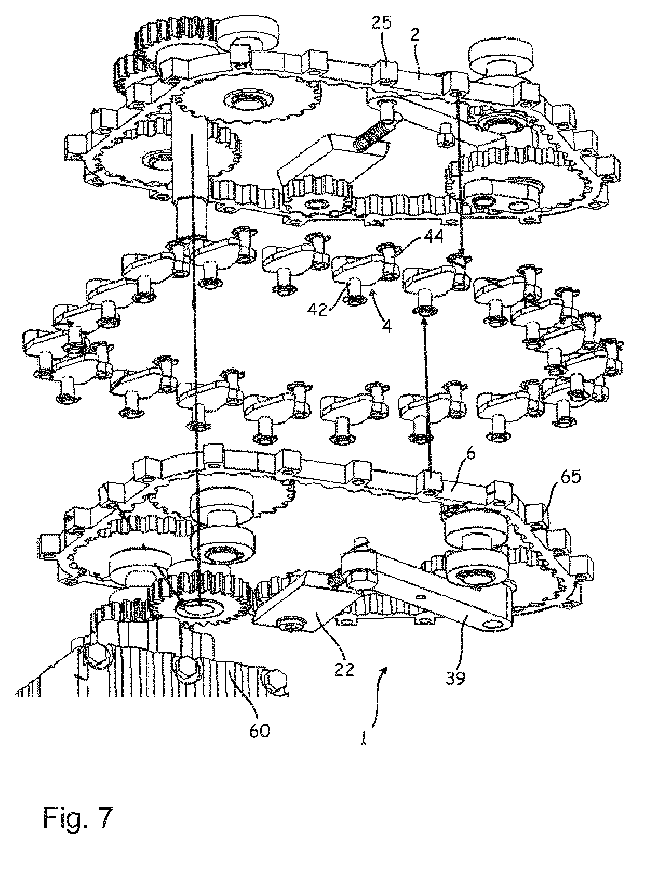

Fig. 7 zeigt eine Explosionsansicht einer erfindungsgemäßen Vorrichtung 1. Hierbei sind insbesondere wieder die beiden riemenartigen Träger 2 und 6 gezeigt, an denen die Eingriffsmittel 4 angelenkt sind. Man erkennt hier die beiden Schwenkwellen 42 und 44, die hier einteilig mit den Eingriffsmitteln 4 ausgebildet sind, wobei die Schwenkwelle 44 an dem ersten Träger 2 und die Schwenkwelle 42 an dem zweiten Träger 6 angelenkt ist. Durch eine Relativbewegung dieser beiden Träger bezüglich einander kann so ein Schwenken der Eingriffsmittel erreicht werden. Das Bezugszeichen 25 kennzeichnet an dem Träger 2 angeordnete Anlenkmittel, an denen die Schwenkwellen der Eingriffsmittel angeordnet werden. Entsprechend kennzeichnet das Bezugszeichen 65 Anlenkmittel des zweiten Trägers 6.

Das Bezugszeichen 60 kennzeichnet einen Antrieb, der die Zahnräder und damit auch die Träger 2 und 6 antreibt. Dabei ist es möglich, dass von der Antriebseinrichtung hier direkt übereinander liegende Zahnräder gleichzeitig über eine gemeinsame Antriebswelle angetrieben werden. Bevorzugt laufen damit die beiden Träger mit der gleichen Umlaufgeschwindigkeit um. Weiterhin werden bevorzugt auch beide Träger 2, 6 jeweils mit gefederten Spannrollen gespannt. Daneben kann auch ein Transferwellenantrieb vorhanden sein, der die Bewegung des unteren Trägers, bzw. der diesen antreibenden Zahnräder auf die jeweiligen oberen Zahnräder überträgt. Bevorzugt sind die Eingriffsmittel 4 zueinander vereinzelt und werden nur über die beiden Träger 2 und 6 in einer bestimmten Position zueinander gehalten. Vorteilhaft sind jedoch die Eingriffsmittel 4 jeweils gleichartig ausgestaltet. Vorteilhaft handelt es sich hierbei um Kunststoffelemente, die besonders bevorzugt derart beschichtet sind, dass sie leicht bzw. reibungsarm zwischen die jeweiligen Kunststoffbehältnisse gleiten können.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger / Zahnriemen
- 4: Eingriffsmittel
- 6: Träger / Zahnriemen
- 10: Kunststoffvorformlinge
- 12: geneigte Zuführschiene
- 13: Übergangsschiene
- 14: Trägerschiene
- 22: Spanneinrichtung / Spannrad
- 24: Umlenkrad
- 25: Anlenkmittel
- 26: Vorspannmittel
- 32: schwenkbarer Arm
- 33: Gelenkverbindung
- 34: Feststellmittel
- 36, 38: Zahnräder
- 39: unterer Arm
- 40: Hauptträger
- 42, 44: Schwenkwellen
- 52, 54: weitere Zahnräder
- 55, 66: Zahnräder
- 60: Antrieb
- 65: Anlenkmittel des zweiten Trägers

- D1: Abstand in der linken Figur
- D2: Abstand in der rechten Figur
- a: Zustellwinkel
- U1, U2: Bahnabschnitte

## Patentansprüche

1. Vorrichtung (1) zum Transportieren von Behältnissen (10) und insbesondere von Kunststoffvorformlingen, mit einem ersten umlaufenden Träger (2), an dem eine Vielzahl von Eingriffsmitteln (4) angeordnet ist, derart, dass diese Eingriffsmittel (4) entlang einer vorgegebenen Umlaufbahn umlaufen,
**dadurch gekennzeichnet, dass**
die Umlaufbahn wenigstens einen Bahnabschnitt (U1) aufweist, in welchem die Eingriffsmittel (4) während ihrer Bewegung entlang der Umlaufbahn auf einen Strom der Behältnisse (10) zustellbar sind und die Eingriffsmittel (4) derart geformt sind, dass sie bei einer Zustellung auf den Strom der Behältnisse (10) zwischen zwei Behältnisse (10) eintreten und diese zwei Behältnisse (10) hierdurch auseinanderdrängen.

2. Vorrichtung (1) nach Anspruch 1,
**dadurch gekennzeichnet, dass**
die Umlaufbahn wenigstens zwei Bahnabschnitte mit unterschiedlichen Krümmungen aufweist.

3. Vorrichtung (1) nach wenigstens einem der vorangegangenen Ansprüche,
**dadurch gekennzeichnet, dass**
der Träger (2) ein umlaufender und wenigstens abschnittsweise flexibler Träger (2) ist.

4. Vorrichtung (1) nach wenigstens einem der vorangegangenen Ansprüche,
**dadurch gekennzeichnet, dass**
die Eingriffsmittel (4) gegenüber dem Träger (2) schwenkbar sind.

5. Vorrichtung (1) nach wenigstens einem der vorangegangenen Ansprüche,
**dadurch gekennzeichnet, dass**
eine geometrische Position wenigstens eines Abschnitts der Umlaufbahn der Eingriffsmittel (4) gegenüber dem Strom der Behältnisse (10) veränderbar ist.

6. Vorrichtung (1) nach wenigstens einem der vorangegangenen Ansprüche,
**dadurch gekennzeichnet, dass**
die Umlaufbahn wenigstens einen geradlinigen Abschnitt (U1, U2) aufweist.

7. Vorrichtung (1) nach wenigstens einem der vorangegangenen Ansprüche,
**dadurch gekennzeichnet, dass**
die Vorrichtung (1) eine Zuführschiene (12) aufweist, welche die Behältnisse (10) stützt und entlang derer die Behältnisse (10) transportiert werden.

8. Vorrichtung (1) nach wenigstens einem der vorangegangenen Ansprüche,
**dadurch gekennzeichnet, dass**
wenigstens ein Eingriffsmittel (4) eine sich erweiternde Gestalt aufweist.

9. Vorrichtung (1) nach wenigstens einem der vorangegangenen Ansprüche,
**dadurch gekennzeichnet, dass**
die Vorrichtung (1) einen zweiten umlaufenden Träger (6) aufweist, wobei eine Umlaufebene des zweiten Trägers (6) parallel zu einer Umlaufebene des ersten Trägers (2) ist.

10. Vorrichtung (1) nach Anspruch 9,
**dadurch gekennzeichnet, dass**
die Eingriffsmittel (4) auch an dem zweiten umlaufenden Träger (6) angeordnet sind.

11. Verfahren zum Transportieren von Kunststoffbehältnissen und insbesondere Kunststoffvorformlingen (10), wobei die Kunstsoffbehältnisse in einem kontinuierlichen Strom angefördert werden und mittels einer Vereinzelungseinrichtung (1) vereinzelt werden,
**dadurch gekennzeichnet, dass**
die Vereinzelungseinrichtung (1) eine Vielzahl von einem umlaufenden Träger (2) angeordneten Eingriffsmitteln (4) aufweist, welche auf einen Strom der Kunststoffbehältnisse (10) zugestellt werden und bei dieser Zustellung jeweils zwischen zwei benachbarte Kunststoffbehältnisse (10) eintreten und diese dadurch auseinanderdrängen, so dass eine Vereinzelung der Kunststoffbehältnisse (10) erreicht wird.

12. Verfahren nach Anspruch 11,
**dadurch gekennzeichnet, dass**
die Kunststoffbehältnisse (10) wenigstens zeitweise und bevorzugt vollständig während ihrer Vereinzelung auf einem geradlinigen Transportpfad transportiert werden.

## Geänderte Patentansprüche

### Geänderte Patentansprüche gemäss Regel 137(2) EPÜ.

**1.** Vorrichtung (1) zum Transportieren von Behältnissen (10) und insbesondere von Kunststoffvorformlingen, mit einem ersten umlaufenden Träger (2), an dem eine Viel-zahl von Eingriffsmitteln (4) angeordnet ist, derart, dass diese Eingriffsmittel (4) entlang einer vorgegebenen Umlaufbahn umlaufen,
**dadurch gekennzeichnet, dass**
die Umlaufbahn wenigstens einen Bahnabschnitt (U1) aufweist, in welchem die Ein-griffsmittel (4) während ihrer Bewegung entlang der Umlaufbahn auf einen Strom der Behältnisse (10) zustellbar sind und die Eingriffsmittel (4) derart geformt sind, dass sie bei einer Zustellung auf den Strom der Behältnisse (10) jeweils zwischen zwei benachbarte Behältnisse (10) eintreten und diese zwei Behältnisse (10) hierdurch auseinanderdrängen.

**2.** Vorrichtung (1) nach Anspruch 1,
**dadurch gekennzeichnet, dass**
die Umlaufbahn wenigstens zwei Bahnabschnitte mit unterschiedlichen Krümmungen aufweist.

**3.** Vorrichtung (1) nach wenigstens einem der vorangegangenen Ansprüche,
**dadurch gekennzeichnet, dass**
der Träger (2) ein umlaufender und wenigstens abschnittsweise flexibler Träger (2) ist.

**4.** Vorrichtung (1) nach wenigstens einem der vorangegangenen Ansprüche,
**dadurch gekennzeichnet, dass**
die Eingriffsmittel (4) gegenüber dem Träger (2) schwenkbar sind.

**5.** Vorrichtung (1) nach wenigstens einem der vorangegangenen Ansprüche,
**dadurch gekennzeichnet, dass**
eine geometrische Position wenigstens eines Abschnitts der Umlaufbahn der Eingriffsmittel (4) gegenüber dem Strom der Behältnisse (10) veränderbar ist.

**6.** Vorrichtung (1) nach wenigstens einem der vorangegangenen Ansprüche,
**dadurch gekennzeichnet, dass**
die Umlaufbahn wenigstens einen geradlinigen Abschnitt (U1, U2) aufweist.

**7.** Vorrichtung (1) nach wenigstens einem der vorangegangenen Ansprüche,
**dadurch gekennzeichnet, dass**
die Vorrichtung (1) eine Zuführschiene (12) aufweist, welche die Behältnisse (10) stützt und entlang derer die Behältnisse (10) transportiert werden.

**8.** Vorrichtung (1) nach wenigstens einem der vorangegangenen Ansprüche,
**dadurch gekennzeichnet, dass**
wenigstens ein Eingriffsmittel (4) eine sich erweiternde Gestalt aufweist.

**9.** Vorrichtung (1) nach wenigstens einem der vorangegangenen Ansprüche,
**dadurch gekennzeichnet, dass**
die Vorrichtung (1) einen zweiten umlaufenden Träger (6) aufweist, wobei eine Umlaufebene des zweiten Trägers (6) parallel zu einer Umlaufebene des ersten Trägers (2) ist.

**10.** Vorrichtung (1) nach Anspruch 9,
**dadurch gekennzeichnet, dass**
die Eingriffsmittel (4) auch an dem zweiten umlaufenden Träger (6) angeordnet sind.

**11.** Verfahren zum Transportieren von Kunststoffbehältnissen und insbesondere Kunststoffvorformlingen (10), wobei die Kunstsoffbehältnisse in einem kontinuierlichen Strom angefördert werden und mittels einer Vereinzelungseinrichtung (1) vereinzelt werden,
**dadurch gekennzeichnet, dass**
die Vereinzelungseinrichtung (1) eine Vielzahl von einem umlaufenden Träger (2) angeordneten Eingriffsmitteln (4) aufweist, welche auf einen Strom der Kunststoffbehältnisse (10) zugestellt werden und bei dieser Zustellung jeweils zwischen zwei benachbarte Kunststoffbehältnisse (10) eintreten und diese **dadurch** auseinanderdrängen, so dass eine Vereinzelung der Kunststoffbehältnisse (10) erreicht wird.

**12.** Verfahren nach Anspruch 11,
**dadurch gekennzeichnet, dass**
die Kunststoffbehältnisse (10) wenigstens zeitweise und bevorzugt vollständig während ihrer Vereinzelung auf einem geradlinigen Transportpfad transportiert werden.
